# EUROPÄISCHE PATENTSCHRIFT

(11) **EP 2 673 531 B1**
(45) Veröffentlichungstag und Bekanntmachung des Hinweises auf die Patenterteilung: **26.07.2017**
(21) Anmeldenummer: 12704059.0
(22) Anmeldetag: 10.02.2012
(51) Int. Cl.: F16F 15/02, F16F 7/104

(54) **SCHWINGUNGSFREIE LAGERUNG EINES OBJEKTS AN EINER STRUKTUR**
MOUNTING AN OBJECT ON A STRUCTURE IN A VIBRATION-FREE MANNER
MONTAGE SANS VIBRATIONS D'UN OBJET SUR UNE STRUCTURE

(30) Priorität: 11.02.2011 DE 102011000656; 21.03.2011 DE 202011000635 U
(43) Veröffentlichungstag der Anmeldung: 18.12.2013
(73) Patentinhaber: Deutsches Zentrum für Luft- und Raumfahrt e.V., 51147 Köln (DE)
(72) Erfinder: MELCHER, Jörg, 38165 Lehre (Groß Brunsrode) (DE); KLETZ, Björn Timo, 38106 Braunschweig (DE); REDLICH, Julian, 38108 Braunschweig (DE)
(74) Vertreter: REHBERG HÜPPE + PARTNER
(86) Internationale Anmeldenummer: PCT/EP2012/052283
(87) Internationale Veröffentlichungsnummer: WO 2012/107551

(56) Entgegenhaltungen:
- EP-A1- 1 927 782
- WO-A1-01/81785
- WO-A2-2006/024426
- DE-A1- 19 537 462
- JP-A- 2007 255 147
- JP-U- 59 106 740
- JP-U- 63 156 848

## Beschreibung

### TECHNISCHES GEBIET DER ERFINDUNG

Die Erfindung bezieht sich auf eine Vorrichtung zur schwingungsfreien Lagerung eines Objekts an einer Struktur, mit einer elastischen Anordnung, die das Objekt an der Struktur abstützt.

Die Schwingungsfreiheit der Lagerung bezieht sich sowohl darauf, dass die Übertragung von Schwingungen von der Struktur auf das Objekt oder umgekehrt verhindert wird, als auch darauf, dass anderen Anregungen von unerwünschten Schwingungen des Objekts entgegengewirkt wird.

In Bezug auf die Verhinderung der Übertragung von Schwingungen von der Struktur auf das Objekt betrifft die vorliegende Erfindung insbesondere die schwingungsfreie Lagerung der Spiegelscheibe eines Außenspiegels eines Kraftfahrzeugs an der Karosserie des Kraftfahrzeugs. Diese spezielle Anwendung der vorliegenden Erfindung ist jedoch grundsätzlich nur als Beispiel für die Anwendung und nicht als Beschränkung der Erfindung zu sehen.

Die Lagerung der Spiegelscheibe eines Außenspiegels eines Kraftfahrzeugs ist ein typisches Beispiel für ein System, in dem sowohl eine Fußpunktanregung ausgehend von der abstützenden Struktur als auch eine Kraftanregung durch externe Kräfte, hier insbesondere aerodynamische Lasten, auftritt. Wenn diese Anregungen zu Schwingungen der Spiegelscheibe des Außenspiegels führen, erscheint das Spiegelbild in der Spiegelscheibe für den Betrachter verwackelt oder unscharf. Hiermit sind erhebliche Sicherheitsrisiken im Straßenverkehr verbunden.

Weitere Anwendungsmöglichkeiten der Erfindung bezüglich der Verhinderung der Übertragung von Schwingungen von der Struktur auf das Objekt umfassen die Lagerung von Sensoren oder auch Handgriffen schlagenden oder rüttelnden Einrichtungen, wie beispielsweise Presslufthämmern.

Anwendungsmöglichkeiten der Erfindung in Hinblick auf die Verhinderung der Übertragung von Schwingungen von dem Objekt auf die Struktur gibt es zum Beispiel bei der Lagerung von schlagenden oder rüttelnden Einrichtungen sowie von jedweden Motoren an ortsfesten oder bewegten Strukturen und bei der Lagerung des Stators von Drehlagern von Rotoren von Windkraftanlagen an deren Masten.

### STAND DER TECHNIK

Es ist bekannt, dass bei verschiedenen derzeit gebauten Kraftfahrzeugen, insbesondere Kleinbussen und LKW, Schwingungen der Spiegelscheibe eines Außenspiegels im Bereich von 10 bis 80 Hz mit erheblicher, als problematisch anzusehender Amplitude auftreten können.

Es ist ferner bekannt, dass Spiegelscheiben von Außenspiegeln von Motorrädern in spezifischen Motordrehzahlbereichen derart intensiv schwingen, dass die Außenspiegel ihre Funktionstüchtigkeit verlieren und sich der Motorradfahrer für die Sicht nach hinten umdrehen muss.

Neben Versuchen, die Abstützung der Spiegelscheibe des jeweiligen Außenspiegels an der Karosserie des Kraftfahrzeugs soweit zu versteifen, dass Schwingungen der Spiegelscheibe gegenüber der Karosserie nicht mehr auftreten, ist es auch bekannt, auftretende Schwingungen der Spiegelscheibe des Außenspiegels mit Reibdämpfern (siehe z. B. DE 101 48 976 B4 oder DE 198 03 459 A1) oder mittels eines Schwingungstilgers (siehe z. B. DE 42 00 744 C2) zu dämpfen. Während Reibdämpfer in ihrer Funktion stark witterungs-, insbesondere feuchtigkeits- und temperaturabhängig sind, häufig keine ausreichende Lebensdauer erreichen und zudem störende Kräfte von der Karosserie auf die Spiegelscheibe des Außenspiegels übertragen, sind Schwingungstilger nur in einem schmalbandigen Frequenzbereich um ihre Tilgereigenfrequenz wirksam.

Es sind auch aktive Maßnahmen zur Unterdrückung von Schwingungen bekannt, bei denen mit ansteuerbaren Funktionsmaterialien Kräfte auf ein gelagertes Objekt aufgebracht werden, um dieses über die Summe der auf das Objekt einwirkenden Kräfte in Ruhe zu halten. Auch eine derartige aktive Schwingungsunterdrückung weist keinen beliebig großen Funktionsbereich auf, wobei hier weniger eine Beschränkung bezüglich der abdeckbaren Frequenzen als eine Beschränkung hinsichtlich der abdeckbaren Amplituden gegeben ist, insbesondere wenn beispielsweise aufgrund von Verstell- und Abklappmechanismen keine im Wesentlichen starre Lagerung einer Spiegelscheibe eines Außenspiegels an einem Kraftfahrzeug möglich ist.

Aus der DE 195 37 462 A1 ist ein Aggregatlager bekannt, das ein Stützlager mit einem Traglager und einem Auflager umfasst, die durch einen ersten Federkörper aus elastomerem Werkstoff aufeinander abgestützt sind. Das Stützlager weist einen Schwingungstilger auf. Der Schwingungstilger umfasst eine Tilgermasse, die durch einen zweiten Federkörper aus elastomerem Werkstoff einstückig mit dem Auflager verbunden ist. Der Schwingungstilger ist vorgesehen, um die Gebrauchseigenschaften des Stützlager verbessert an den jeweiligen Anwendungsfall anpassen zu können, und kann zur Dämpfung tieferfrequenter oder höherfrequenter Schwingungen abgestimmt sein.

Aus der WO 2006/024426 A2 ist ein Elastomerlager für ein Kraftfahrzeug bekannt, das einen zwischen einem Außendurchmesser eines inneren Lagerbauteils und dem inneren Durchmesser eines äußeren Lagerbauteils angeordneten Elastomerkern und ein in dem Elastomerkern angeordnetes erstes Masseelement aufweist. Dabei ist das erste Masseelement über ein Federelement mit einem zweiten Masseelement verbunden. Das erste Masseelement ist als Hohlzylinder ausgeführt, während das zweite Masseelement als geschlossener Ring ausgeführt ist.

Aus der EP 1 927 782 A1 ist ein aktiver Tilger bekannt, der eine Tilgermasse und eine Befestigungsvorrichtung aufweist. Mindestens ein Biegebalken verbindet die Tilgermasse mit der Befestigungsvorrichtung, wobei auf einer ersten Seite des Biegebalkens mindestens ein Piezoaktuator angeordnet ist. Auf der gegenüberliegenden Seite des Biegebalkens kann mindestens ein weiterer Piezoaktuator angeordnet sein. Die Piezoaktuatoren sind vorzugsweise in der Nähe der Verbindungsstelle von Tilgermasse und Biegebalken sowie von Biegebalken und Befestigungsvorrichtung angeordnet.

Aus der JP 2007 255147 A ist ein Schwingungsdämpfer zur Dämpfung von Schwingungen von Körperschall zwischen Stockwerken eines Gebäudes bekannt. Der Schwingungsdämpfer weist zwei Stützelemente auf, die einmal an dem Boden eines oberen und einmal an der Decke eines unteren Stockwerks angebunden sind. An die Stützelemente sind einander überlappende und miteinander verbundene Schwenkarme angebunden, wobei im Bereich der Überlappung und Verbindung Dämpfungsmittel vorgesehen sind.

### AUFGABE DER ERFINDUNG

Der Erfindung liegt die Aufgabe zugrunde, eine Vorrichtung zur schwingungsfreien Lagerung eines Objekts an einer Struktur aufzuzeigen, die grundsätzliche Vorteile, zum Beispiel bei der Lagerung eines aerodynamischen Lasten ausgesetzten Objekts an der Karosserie eines Kraftfahrzeugs aufweist.

### LÖSUNG

Die Aufgabe der Erfindung wird durch eine Vorrichtung mit den Merkmalen des unabhängigen Patentanspruchs 1 gelöst. Bevorzugte Ausführungsformen der neuen Vorrichtung sind in den abhängigen Patentansprüchen 2 bis 9 definiert. Der nebengeordnete Patentanspruch 10 ist auf einen Außenspiegel eines Kraftfahrzeugs mit der neuen Vorrichtung zur schwingungsfreien Lagerung der Spiegelscheibe des Außenspiegels gerichtet. Der abhängige Patentanspruch 11 definiert eine bevorzugte Ausführungsform des neuen Außenspiegels. Die nebengeordneten Ansprüche 12 bis 15 betreffen verschiedene weitere Lager in denen die neue Vorrichtung besonders vorteilhaft zur Anwendung kommen kann.

### BESCHREIBUNG DER ERFINDUNG

Die neue Vorrichtung zur schwingungsfreien Lagerung eines Objekts an einer Struktur weist eine elastische Anordnung auf, die das Objekt in den Richtungen von mindestens zwei der insgesamt sechs translatorischen und rotatorischen Freiheitsgrade hart und in den Richtungen von mindestens zwei der insgesamt sechs translatorischen und rotatorischen Freiheitsgrade weich an der Struktur abstützt. Dabei weisen Hauptbewegungsmoden des Objekts in den Richtungen der harten Abstützung um mindestens einen Faktor zehn höhere Eigenfrequenzen als Hauptbewegungsmoden des Objekts in den Richtungen der weichen Abstützung auf, und die weiche Abstützung ist als solche ungedämpft. Darüber hinaus ist eine Tilgungseinrichtung für Schwingungen des Objekts in den Richtungen vorgesehen, in denen das Objekt weich an der Struktur abgestützt ist.

Die elastische Anordnung der neuen Vorrichtung trennt scharf zwischen Freiheitsgraden, in denen eine weiche Abstützung des Objekts an der Struktur erfolgt, und Freiheitsgraden, in denen eine harte Abstützung des Objekts an der Struktur erfolgt. Bei Betrachtung der Gesamtheit der sechs translatorischen und rotatorischen Freiheitsgrade, die sich aus drei translatorischen Freiheitsgraden, d. h. linearen Bewegungen in den drei Raumrichtungen, und drei rotatorischen Freiheitsgraden, d. h. Drehbewegungen um die drei Raumrichtungen, zusammensetzen, ist die weiche Abstützung und die harte Abstützung in den Richtungen von jeweils mindestens zwei Freiheitsgraden gegeben. Typischerweise umfassen die Richtungen der weichen Abstützung diejenigen eines translatorischen Freiheitsgrads und von zwei rotatorischen Freiheitsgraden um die beiden zu der Richtung des translatorischen Freiheitsgrads orthogonalen Achsen, während die harte Abstützung in den Richtungen der verbleibenden zwei translatorischen und eines rotatorischen Freiheitsgrads gegeben ist.

Die weiche Abstützung hat dabei die Funktion einer elastischen Entkopplung des Objekts von der Struktur in den Richtungen der jeweiligen Freiheitsgrade. D. h., diese weiche Abstützung ist selektiv in den Richtungen vorzusehen, in denen eine Anregung des Objekts zu Schwingungen von der schwingenden Struktur oder umgekehrt ausgeht. Die von der weichen Abstützung bewirkte Entkopplung hat in diesen Richtungen eine Schwingungsisolation des Objekts von der Struktur zur Folge. Es versteht sich, dass dies nur für Frequenzen oberhalb der Eigenfrequenzen der Hauptbewegungsmoden des Objekts in den Richtungen der weichen Abstützung gilt. Diese Eigenfrequenzen des Objekts in den Richtungen der weichen Abstützung können aber gezielt so niedrig gewählt werden, dass sie unterhalb der Frequenzen liegen, mit denen die Struktur im Normalfall schwingt. Zudem ist die Tilgungseinrichtung für die Hauptbewegungsmoden des Objekts in den Richtungen der weichen Abstützung vorgesehen, die im Bereich niedriger Frequenzen von der Struktur bis zu dem Objekt vordringende Anregungen kompensiert.

Während die Richtungen der weichen Abstützung die Richtungen sind, in denen Schwingungen der Struktur von dem Objekt zu isolieren sind, sind die Richtungen der harten Abstützung bei der neuen Vorrichtung auf die Richtungen abzustimmen, in denen das Objekt der Struktur bei Bewegungen der Struktur folgen soll und/oder in denen das Objekt gegenüber externen Kräften an der Struktur abzustützen ist.

Besonders bevorzugt ist es bei der neuen Vorrichtung, wenn die Hauptbewegungsmoden des Objekts in den Richtungen der weichen Abstützung voneinander entkoppelt sind. Dies bedeutet, das eine Auslenkung des Objekts in der Richtung eines Freiheitsgrads nicht zwangsläufig auch eine Auslenkung in der Richtung des anderen Freiheitsgrads zur Folge hat. Eine noch weitergehende Trennung wird durch voneinander beabstandete Eigenfrequenzen der verschiedenen Hauptbewegungsmoden erreicht. Verhindert wird durch die Entkopplung, dass eine wechselweise Anregung der Hauptbewegungsmoden des Objekts erfolgt. Dies erleichtert es, mit der Tilgungseinrichtung die Hauptbewegungsmoden des Objekts in den Richtungen der weichen Abstützung zu bedämpfen. Konkret reicht es dann aus, wenn die Tilgungseinrichtung in Bezug auf den Frequenzraum schmalbandig um diese Eigenfrequenzen herum Bewegungen des Objekts abmindert.

Realisiert werden kann dies beispielsweise mit einer passiven gedämpften Tilgungseinrichtung, die auf die Eigenfrequenzen der Hauptbewegungsmoden des Objekts in den Richtungen der weichen Abstützung abgestimmte Tilgereigenfrequenzen aufweist. Eine solche Tilgungseinrichtung kann eine oder mehrere elastisch an dem Objekt abgestützte Tilgermassen aufweisen. Aufgrund der Dämpfung der Tilgungseinrichtung weist sie nicht nur bei ihren Tilgereigenfrequenzen, sondern auch in einem sich darum erstreckenden Frequenzband eine Tilgerwirkung auf. Idealerweise werden die Tilgereigenfrequenzen der Tilgungseinrichtung etwas kleiner, beispielsweise um 5 % bis 25 % kleiner, als die Eigenfrequenzen der Hauptbewegungsmoden des Objekts in den Richtungen der weichen Abstützung eingestellt, um das Frequenzband mit der Tilgerwirkung optimal auf die Hauptbewegungsmoden abzustimmen.

Das Lehrsche Dämpfungsmaß der gedämpften Tilgungseinrichtung ist vorzugsweise < 0,5. Häufiger ist es < 0,4 oder noch kleiner.

Die Tilgungseinrichtung der neuen Vorrichtung kann eine einzige Tilgermasse aufweisen, um das Objekt in allen Richtungen der weichen Abstützung zu bedämpfen, wenn die Tilgermasse über eine weitere elastische Anordnung an das Objekt angekoppelt ist, die zu der elastischen Anordnung, über die das Objekt an der Struktur gelagert ist, äquivalent ist. Diese Äquivalenz bezieht sich auf die Freiheitsgrade, in denen die Tilgermasse an dem Objekt hart bzw. weich abgestützt ist. Sie bezieht sich nicht auf die Dämpfung der Abstützung.

Die Tilgermasse(n) der Tilgungseinrichtung kann/können auch dazu genutzt werden, das Objekt bezüglich seiner Anbindung an die elastische Anordnung zumindest teilweise auszubalancieren. Dabei geht es auch um eine dynamische Balance bei gemeinsamen Bewegungen des Objekts und der Struktur in den Richtungen der harten Abstützung.

Für das konkrete Anwendungsbeispiel eines Außenspiegels, dessen Spiegelscheibe an der Karosserie eines Kraftfahrzeugs zu lagern ist, oder andere Fälle, in denen eine Schwingung im Bereich einiger 10 Hz des Objekts insbesondere unterdrückt werden soll, können die Hauptbewegungsmoden des Objekts in den Richtungen der weichen Abstützung zum Beispiel Eigenfrequenzen < 10 Hz und die Hauptbewegungsmoden des Objekts in den Richtungen der harten Abstützung zum Beispiel Eigenfrequenzen > 100 Hz aufweisen.

Die Funktion der neuen Vorrichtung basiert auch auf einer gewissen Masse des gelagerten Objekts, insbesondere, wenn die Tilgungseinrichtung eine oder mehrere an das Objekt elastisch angekoppelte Tilgermasse(n) aufweist. Eine typische Mindestmasse des Objekts liegt dabei im Bereich von 100 g bis 200 g. Vorzugsweise liegt sie auch darüber. Nach oben sind im Prinzip für die Masse des Objekts keine Grenzen gesetzt. Die neue Vorrichtung kann auch für die Lagerung sehr schwergewichtiger Objekte an einer Struktur Verwendung finden, bis hinein in den Bereich mehrerer Tonnen.

Die elastische Anordnung weist zwei Federelemente auf, die an der Struktur oder dem Objekt in Befestigungsbereichen befestigt sein können, welche einander über den Schwerpunkt des Objekts hinweg gegenüberliegen.

Die Federelemente sind in ihrer Blattebene spiralförmig ineinander gewundene Blattfedern. Derartige Blattfederanordnungen sind für die translatorischen Freiheitsgrade mit Richtungen in der Blattebene und den rotatorischen Freiheitsgrad um die Richtung orthogonal zur Blattebene sehr steif. Für die drei anderen Freiheitsgrade ist die durch die Blattfedern bewirkte Abstützung hingegen weich. Durch die Verwendung von mindestens zwei ineinander gewundenen Blattfedern wird eine Entkopplung der Richtungen der weichen Abstützung des Objekts bewirkt, indem eine Auslenkung des Objekts in der einen Richtung der weichen Abstützung nicht auch automatisch zu einer Auslenkung des Objekts in einer anderen Richtung der weichen Abstützung führt.

Die elastische Anordnung der neuen Vorrichtung kann nicht nur eine sondern auch mehrere parallel geschaltete diskrete elastische Teilanordnungen aufweisen, um beispielsweise die Baugröße jeder der Teilanordnungen trotz eines großen und schweren zu lagernden Objekts zu begrenzen.

Neben passiven Elementen kann die elastische Anordnung auch ansteuerbare Funktionsmaterialien umfassen. Diese ansteuerbaren Funktionsmaterialen können Teil der Tilgungseinrichtung sein, und zwar sowohl einer passiven Tilgungseinrichtung, bei denen die Funktionsmaterialien zum Beispiel Teil eines mechanisch-elektrischen Schwingkreises sind, als auch von aktiven Tilgungseinrichtungen, in denen die Funktionsmaterialien im Sinne einer aktiven Dämpfung des Objekts in den Richtungen der Hauptmoden der weichen Abstützung angesteuert werden. Dabei rufen die Funktionsmaterialien z. B. Kräfte auf das Objekt hervor, die dieses in Ruhe halten; oder sie gleichen im Sinne einer unendlich weichen Feder Relativbewegungen zwischen dem Objekt und der Struktur aus, um die Übertragung von Kräften zwischen dem Objekt und der Struktur zu verhindern. Vorzugsweise sind die Funktionsmaterialien dabei so angeordnet, dass sie beim Ansteuern die Bewegungen und/oder Kräfte in den Richtungen der weichen Abstützung zwischen dem Objekt und der Struktur hervorrufen. Dabei können die Funktionsmaterialien auch in eine weitere elastische Anordnung, die eine Tilgermasse an dem Objekt abstützt, integriert sein, um diesen aktiv ansteuerbar zu machen, obwohl im Falle einer aktiven Tilgungseinrichtung auf einen zusätzlichen passiven Schwingungstilger auch verzichtet werden kann. So werden die Funktionsmaterialien vorzugsweise derart in die elastische Anordnung integriert, dass mechanische Schwingungstilger für das Objekt nicht benötigt werden, um die Hauptbewegungsmoden zu unterdrücken. Dazu werden die Funktionsmaterialien beispielsweise auf die spiralförmigen Blattfedern laminiert.

Wie bereits angedeutet wurde, ist eine bevorzugte Verwendung der neuen Vorrichtung die Lagerung der Spiegelscheibe, d. h. der spiegelnden Scheibe eines Außenspiegels an der Karosserie eines Kraftfahrzeugs. Dabei sind die Richtungen der weichen Abstützung insbesondere im Wesentlichen diejenigen eines translatorischen Freiheitsgrads parallel zur Fahrzeuglängsachse und von zwei rotatorischen Freiheitsgraden um die Fahrzeugquerachse und die Fahrzeughochachse. Eine genaue Übereinstimmung der Richtungen der weichen Abstützung mit den genannten Achsen ist aber nicht entscheidend.

Bei dem erfindungsgemäßen Außenspiegel stützt die erfindungsgemäße Vorrichtung die Spiegelscheibe an einem Scheibenhalter ab, d. h. an einer der Spiegelscheibe zugekehrten Schnittstelle des Außenspiegels.

Der Scheibenhalter ist typischerweise zumindest teilweise von einem Spiegelgehäuse umgeben. An diesem Spiegelgehäuse ist er über eine Verstelleinrichtung verschwenkbar gelagert. Diese Verstelleinrichtung liegt damit auf der der Spiegelscheibe abgekehrten Seite der erfindungsgemäßen Vorrichtung zur Karosserie des Kraftfahrzeugs hin. Dort befindet sich ggf. auch ein Klappgelenk, um das das gesamte Spiegelgehäuse gegenüber der Karosserie abklappbar sein kann.

Vorzugsweise ist die Spiegelscheibe bei dem erfindungsgemäßen Außenspiegel gegenüber einem Rand des Scheibenhalters und/oder gegenüber einem Rand des Spiegelgehäuses nach innen in den Scheibenhalter bzw. das Spiegelgehäuse hinein versetzt angeordnet. Die Spiegelscheibe ist so durch das Spiegelgehäuse bzw. den Scheibenhalter nicht nur vor direkten aerodynamischen Lasten geschützt, sondern auch Wirbel, die sich am Rand des Spiegelgehäuses oder Scheibenhalters bilden, treffen nicht auf die Spiegelscheibe. Einzig aus diesen Wirbeln resultierende Druckschwankungen können zu einer Fußpunktanregung der Spiegelscheibe führen. Gegenüber solchen Fußpunktanregungen ist die Spiegelscheibe jedoch über die erfindungsgemäße Vorrichtung in idealer Weise, d. h. in ideal entkoppelter und gedämpfter Weise gelagert.

In einer anderen konkreten Anwendung ist die erfindungsgemäße Vorrichtung Teil einer Windkraftanlage und dient darin zur schwingungsfreien Lagerung eines Drehlagers eines um eine Rotorachse umlaufenden Rotors an einem Mast der Windkraftanlage. In diesem Anwendungsfall geht es insbesondere darum zu vermeiden, dass sich aerodynamische Anregungen des Rotors zerstörerisch auswirken. Derartige zerstörerische Auswirkungen können nicht nur im Bereich des Drehlagers oder der gesamten Gondel am freien Ende des Masts sondern auch im Bereich des Fundaments des Masts auftreten. Zum Drehlager für den um die Rotorachse umlaufenden Rotors gehört in der Regel auch ein die Drehzahl des Rotors hochsetzendes Getriebe und ggf. auch ein Generator, der von dem Rotor angetrieben wird, soweit deren Statoren fest mit dem Stator des Drehlagers des Rotors verbunden sind oder diesen gar ausbilden. Die Richtungen der weichen Abstützung durch die elastische Anordnung der erfindungsgemäßen Vorrichtung sind bei einer Windkraftanlage vorzugsweise diejenigen eines translatorischen Freiheitsgrads in Richtung der Rotorachse und von zwei rotatorischen Freiheitsgraden um die dazu orthogonale vertikale und horizontale Achse.

Ein weiterer Anwendungsfall der erfindungsgemäßen Vorrichtung ist ein Motorlager zur schwingungsfreien Lagerung eines Motors mit einem um eine Drehachse umlaufenden Rotor an einer ortsfesten oder bewegten Struktur. Es kann sich also zum Beispiel um einen Motor eines Kraftfahrzeugs oder einen stationären Motor handeln. In jedem Fall ist zu vermeiden, dass der Motor Schwingungen der Struktur anregt. Dazu sind die Richtungen der weichen Abstützung durch die erfindungsgemäße Vorrichtung vorzugsweise diejenigen eines translatorischen Freiheitsgrads in Richtung der Motorachse und von zwei rotatorischen Freiheitsgraden um die dazu und zueinander orthogonalen Achsen.

Eine weitere konkrete Anwendung der erfindungsgemäßen Vorrichtung ist diejenige zur schwingungsfreien Lagerung einer schlagenden oder rüttelnden Einrichtung mit einer längs einer Hauptachse wiederholt beschleunigten Masse an einer ortsfesten oder bewegten Struktur. Solche Einrichtungen werden auch als Rüttler oder Schlagwerke bezeichnet. Sie schließen Schmiedehämmer und ähnliche schlagende Werkzeuge ein. In diesen Fällen sind die Richtungen der weichen Abstützung durch die elastische Anordnung der erfindungsgemäßen Vorrichtung vorzugsweise diejenigen eines translatorischen Freiheitsgrads in Richtung der Hauptachse und von zwei rotatorischen Freiheitsgraden um die dazu und zueinander orthogonalen Achsen.

Die erfindungsgemäße Vorrichtung kann auch zur schwingungsfreien Lagerung eines Objekts an einer schlagenden oder rüttelnden Einrichtung mit einer längs einer Hauptachse wiederholt beschleunigten Masse verwendet werden, beispielsweise um an einer solchen Einrichtung ein stoßempfindliches Instrument, wie beispielsweise einen Sensor oder auch einen Handgriff zu lagern, der den Stößen der Masse zum Schutz einer angreifenden Hand nicht ausgesetzt sein soll. Auch in diesen Fällen sind die Richtungen der weichen Abstützung vorzugsweise diejenigen des translatorischen Freiheitsgrads in Richtung der Hauptachse und von zwei rotatorischen Freiheitsgraden um die dazu und zueinander orthogonalen Achsen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von allen erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist auch abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Die Erfindung wird im Folgenden anhand von Ausführungsbeispielen unter Bezugnahme auf die beigefügten Zeichnungen näher erläutert und beschrieben.

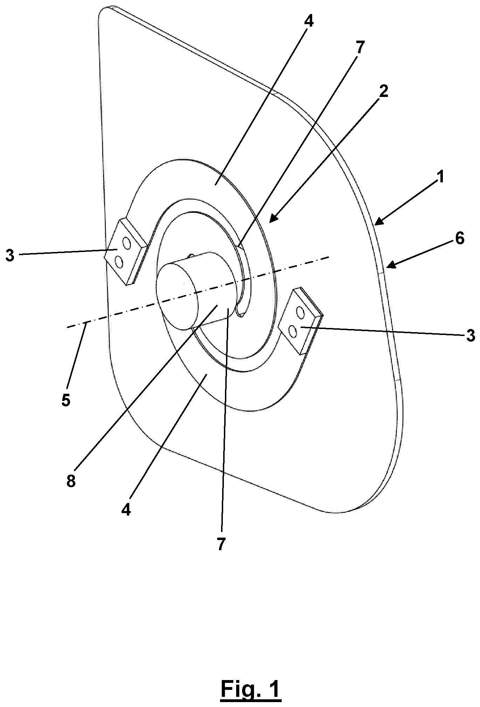

- **Fig. 1**: ist eine perspektivische Rückansicht einer Spiegelscheibe eines Außenspiegels für ein Kraftfahrzeug mit wesentlichen Teilen einer Vorrichtung zur schwingungsfreien Lagerung an einer hier nicht dargestellten Karosserie des Kraftfahrzeugs.

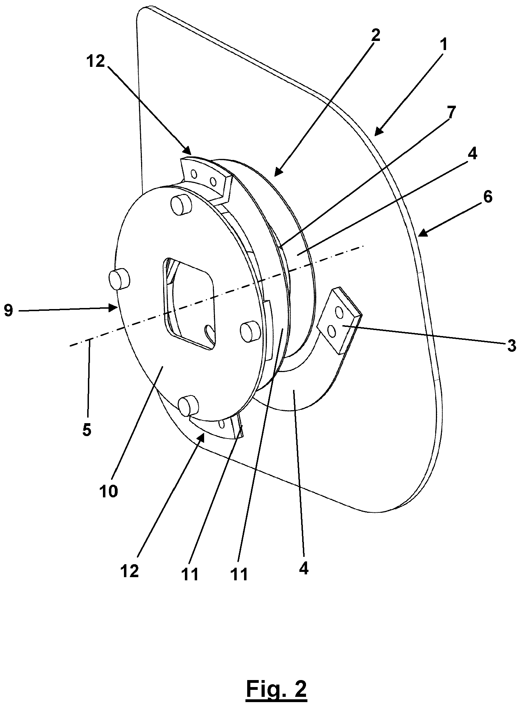

- **Fig. 2**: ist eine Fig. 1 von der Blickrichtung entsprechende Rückansicht einer Spiegelscheibe eines Außenspiegels für ein Kraftfahrzeug mit einer Ausführungsform der vollständigen Vorrichtung zur schwingungsfreien Lagerung der Spiegelscheibe an der Karosserie eines Kraftfahrzeugs, die hier einen Schwingungstilger aufweist.

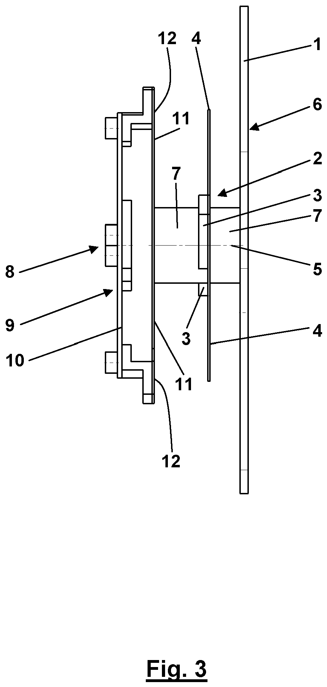

- **Fig. 3**: zeigt die Spiegelscheibe und die Vorrichtung zur schwingungsfreien Lagerung gemäß Fig. 2 in einer Seitenansicht.

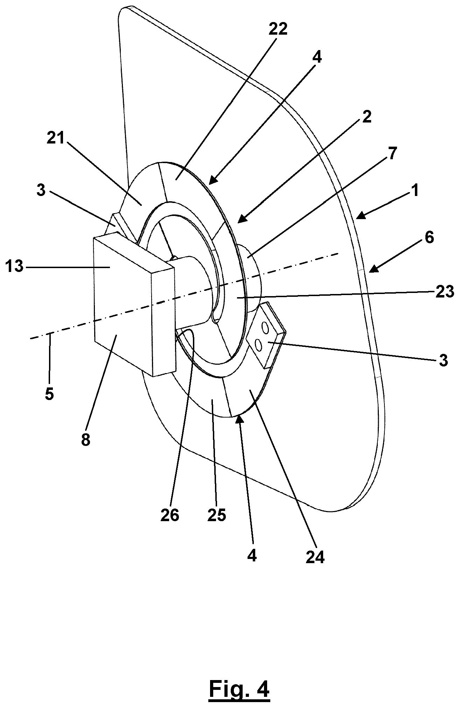

- **Fig. 4**: ist eine perspektivische Rückansicht einer Spiegelscheibe eines Außenspiegels für ein Kraftfahrzeug mit einer Ausführungsform der Vorrichtung zur schwingungsfreien Lagerung der Spiegelscheibe an einer Karosserie des Kraftfahrzeugs, bei der ansteuerbare Funktionsmaterialien in eine elastische Anordnung integriert sind.

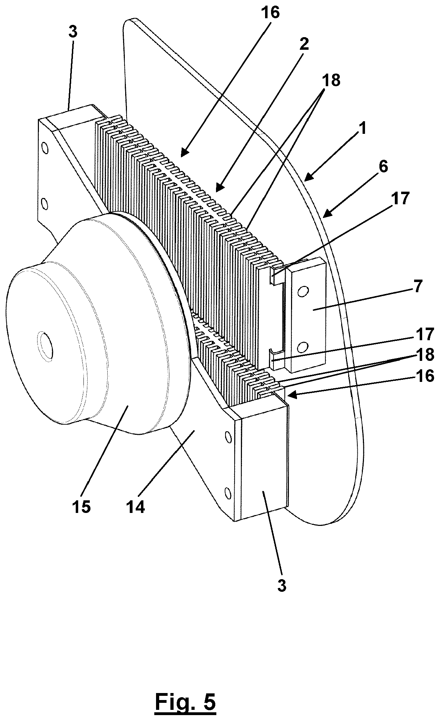

- **Fig. 5**: ist eine perspektivische Rückansicht einer Spiegelscheibe eines Außenspiegels für ein Kraftfahrzeug mit wesentlichen Teilen einer nicht unter die Patentansprüche fallenden Vorrichtung zur schwingungsfreien Lagerung der Spiegelscheibe an der Karosserie des Kraftfahrzeugs, die statt spiralförmigen Blattfedern, die bei den Ausführungsformen der Fig. 1 bis 4 vorgesehen sind, mit Stringern ausgesteifte Paare von Biegebalken umfassen. Zusätzlich ist in Fig. 5 eine Verstelleinrichtung für die Spiegelscheibe angedeutet.

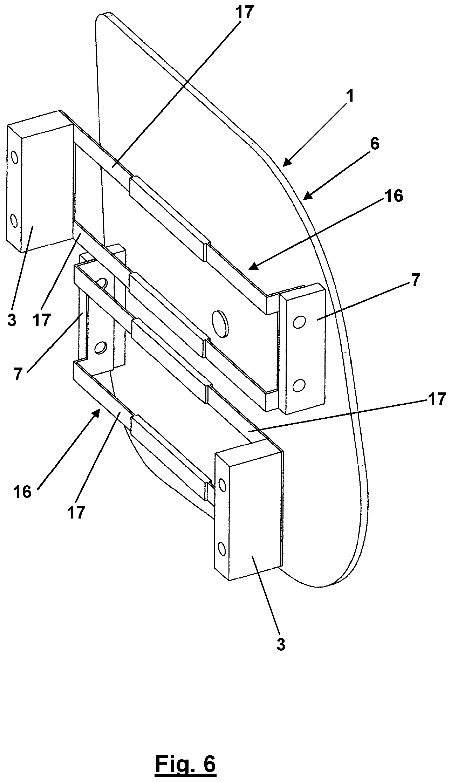

- **Fig. 6**: zeigt die Spiegelscheibe mit den Biegebalken gemäß Fig. 5, aber ohne die Stringer.

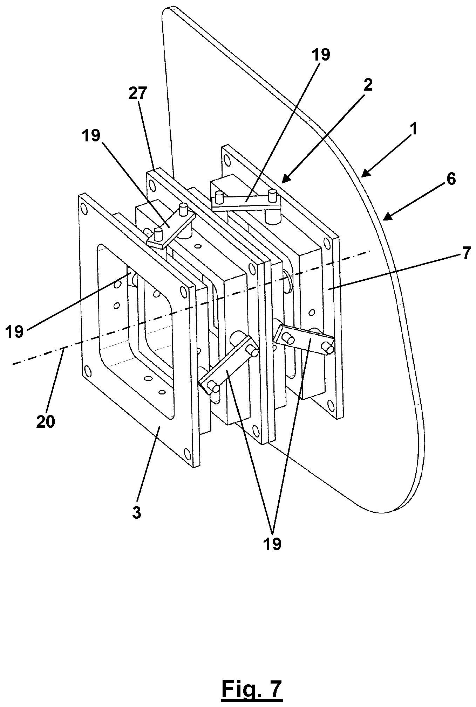

- **Fig. 7**: ist eine perspektivische Rückansicht einer Spiegelscheibe eines Außenspiegels für ein Kraftfahrzeug mit wesentlichen Teilen einer nicht unter die Patentansprüche fallenden Vorrichtung zur schwingungsfreien Lagerung der Spiegelscheibe an der Karosserie des Kraftfahrzeugs, die hier ein Paar von in Reihe geschalteten Vierfachhelices mit einander entgegengesetzten Steigungen umfassen.

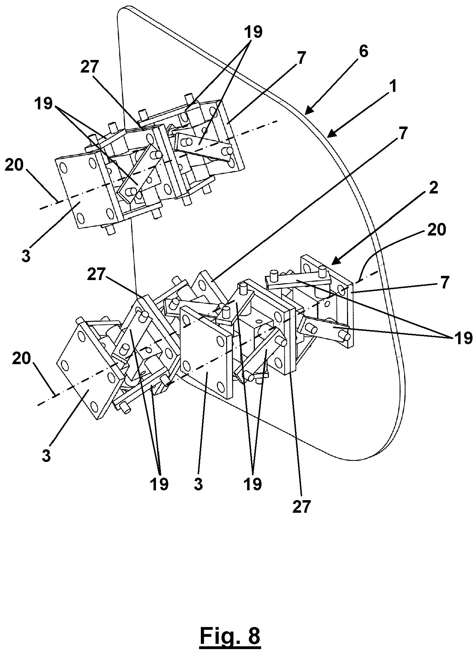

- **Fig. 8**: ist eine perspektivische Rückansicht einer Spiegelscheibe eines Außenspiegels für ein Kraftfahrzeug mit wesentlichen Teilen einer nicht unter die Patentansprüche fallenden Vorrichtung zur schwingungsfreien Lagerung der Spiegelscheibe an der Karosserie des Kraftfahrzeugs, die hier drei Paare von in Reihe geschalteten Vierfachhelices mit einander entgegengesetzten Steigungen umfassen.

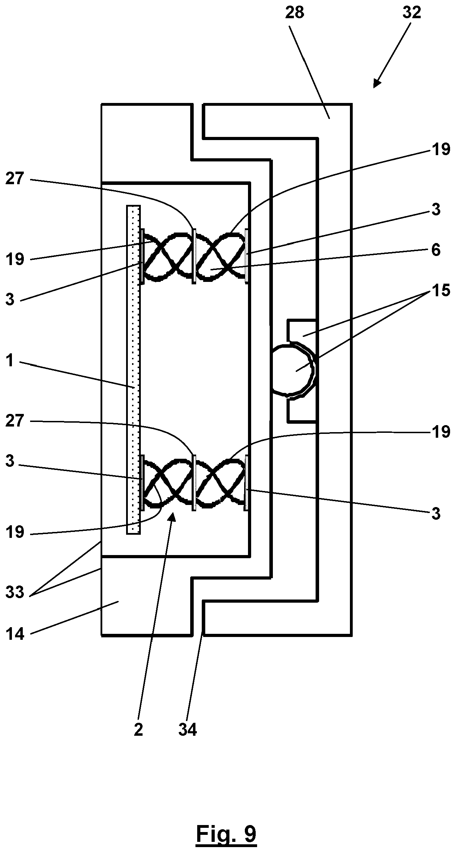

- **Fig. 9**: ist ein Längsschnitt durch einen vollständigen Außenspiegel für ein Kraftfahrzeug mit einer nicht unter die Patentansprüche fallenden Vorrichtung zur schwingungsfreien Lagerung seiner Spiegelscheibe an der Karosserie des Kraftfahrzeugs, die hier ähnlich wie in Fig. 8 aus Paaren von in Reihe geschalteten Dreifachhelices mit einander entgegengesetzten Steigungen aufgebaut ist.

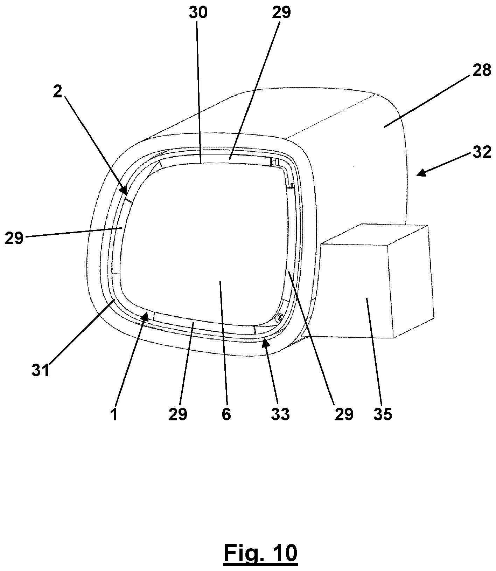

- **Fig. 10**: ist eine perspektivische Ansicht eines Außenspiegels für ein Kraftfahrzeug mit Blickrichtung auf dessen Spiegelscheibe, wobei eine nicht unter die Patentansprüche fallenden Vorrichtung zur schwingungsfreien Lagerung der Spiegelscheibe an der Karosserie hier über den Umfang der Spiegelscheibe verteilte Elastomerfedern aufweist; und

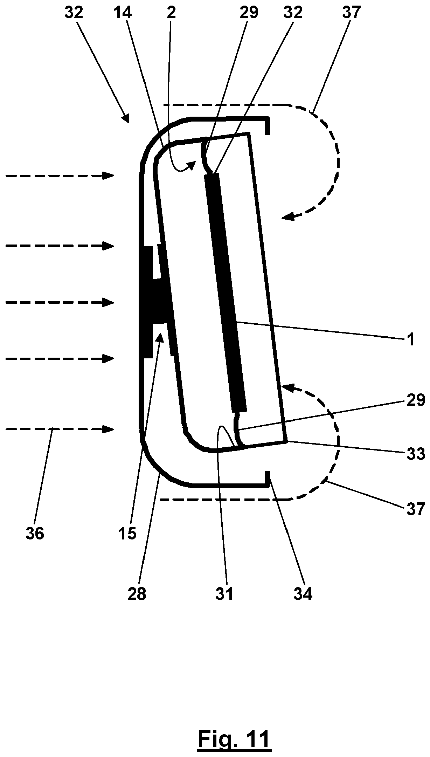

- **Fig. 11**: ist ein Längsschnitt durch den Außenspiegel gemäß Fig. 10.

### FIGURENBESCHREIBUNG

Zur Lagerung der in **Fig.1** mit perspektivischem Blick auf ihre Rückseite dargestellten Spiegelscheibe 1 eines Außenspiegels für ein Kraftfahrzeug ist eine Vorrichtung 2 vorgesehen, die zwei Schnittstellen 3 zur Lagerung an einer Karosserie des Kraftfahrzeugs oder an gegenüber der Karosserie festliegenden Punkten aufweist. Von diesen beiden Schnittstellen 3 erstreckt sich jeweils eine spiralförmige Blattfeder 4. Beide Blattfedern 4 weisen dieselbe Spiralachse 5 auf, über die hinweg sich die beiden Schnittstellen 3 diametral gegenüberliegen. Die Spiralachse 5 verläuft orthogonal zu der hier abgewandten Spiegelebene 6 der Spiegelscheibe 1 und durch den Schwerpunkt der Spiegelscheibe 1. Die Blattfedern 4 verlaufen in ihrem unbelasteten Zustand in einer gemeinsamen Blattebene, die orthogonal zu der Spiralfeder 5 und damit parallel zu der Spiegelebene 6 verläuft. Im Bereich der Spiralachse 5 ist der Außenspiegel 1 an beide Blattfedern 4 über eine gemeinsame Schnittstelle 7 fest angekoppelt. Auf der der Spiegelscheibe 1 gegenüberliegenden Seite der Blattebene der Spiralfedern 4 bildet die Schnittstelle 7 eine Ausgleichsmasse 8 für die Spiegelscheibe 1 aus. Die Vorrichtung 4 führt die Spiegelscheibe 1 bezüglich der translatorischen Freiheitsgrade parallel zu der Spiegelebene 6 und bezüglich des rotatorischen Freiheitsgrads um die Spiralachse 5 steif und in den Richtungen der verbleibenden drei Freiheitsgrade, d. h. des translatorischen Freiheitsgrads in Richtung der Spiralachse 5 und der rotatorischen Freiheitsgrade um Achsen orthogonal zu der Spiralachse 5 weich. Dabei sind die Hauptbewegungsmoden in Richtung der einzelnen Freiheitsgrade entkoppelt, d. h. die Einleitung einer Bewegung in Richtung des einen Freiheitsgrads hat nicht zwangsläufig auch eine Bewegung der Spiegelscheibe 1 in eine Richtung eines anderen Freiheitsgrads zur Folge. Die starre Abstützung in ausgewählten Richtungen lässt die Spiegelscheibe 1 in diesen Richtungen der Karosserie des Kraftfahrzeugs unmittel folgen bzw. stützt die Spiegelscheibe 1 gegenüber externen Lasten und Kräften an der Karosserie ab. Die weiche Abstützung in den anderen Richtungen bewirkt eine Schwingungsisolierung der Spiegelscheibe 1 von der Karosserie des Kraftfahrzeugs oberhalb der niedrigen Eigenfrequenzen dieser weichen Abstützung.

Um auch bei diesen niedrigen Eigenfrequenzen unerwünschte Schwingungen der Spiegelscheibe 1 zu vermeiden, ist bei der Vorrichtung 2 eine in Fig. 1 nicht dargestellte Tilgungseinrichtung für die Hauptbewegungsmoden der Spiegelscheibe 1 in den Richtungen der weichen Abstützung vorgesehen. Diese Tilgungseinrichtung kann die in den **Fig. 2** **und** **3** gezeigte Form eines Schwingungstilgers 9 haben, der auf der der Spiegelscheibe 1 gegenüberliegenden Seite der Blattebene der Spiralfedern 4 an die Schnittstelle 7 angekoppelt ist und damit als zusätzliche Ausgleichsmasse 8 für die Spiegelscheibe 1 wirkt. Dabei ist eine Tilgermasse 10 des Schwingungstilgers 9 über eine elastische Anordnung an die Schnittstelle 7 angekoppelt, die zu der elastische Anordnung der Blattfedern 4 äquivalent ist, indem sie ebenfalls aus spiralförmigen Blattfedern 11 mit einem gemeinsamen Zentrum auf der Spiralachse 5 besteht, wobei eine Blattebene der Spiralfedern 11 parallel zu der Blattebene der Spiralfedern 4 verläuft und wobei die Spiralfedern 11 mit ihrem gemeinsamen Zentrum im Bereich der Spiralachse 5 an der Schnittstelle 7 und an der Tilgermasse 6 in einander über die Spiralachse 5 gegenüberliegenden Bereichen 12 festgelegt sind. Der Schwingungstilger 9 weist drei Tilgerhauptmoden mit Tilgereigenfrequenzen auf, die genau auf die drei Hauptbewegungsmoden und die zugehörigen Eigenfrequenzen der Spiegelscheibe 1 in den Richtungen der weichen Abstützung über die Vorrichtung 2 abgestimmt sind. Der Schwingungstilger 9 hält damit die Spiegelscheibe 1 in Bezug auf diese Hauptbewegungsmoden in Ruhe.

Die Ausführungsform der Vorrichtung 2 zur schwingungsfreien Lagerung der Spiegelscheibe 1 gemäß **Fig. 4** basiert wieder auf derjenigen gemäß Fig. 1, wobei hier die Ausgleichsmasse 8 um einen weiteren starr an die Schnittstelle 7 angekoppelten Körper 13 erweitert ist. Die Tilgungseinrichtung besteht aus in die elastische Anordnung mit den Blattfedern 4 integrierten Funktionsmaterialen in Form von so genannten Piezo-Patches 21-26. Diese Piezo-Patches sind auf die Spiralfedern 4 laminiert und weisen zwischen zwei Elektroden eine piezoelektrische Schicht auf, die sich bei Anlegen einer externen Spannung parallel zu der Oberfläche der Spiralfeder 4 dehnt. Dadurch wird die Spiralfeder 4 nach dem Konzept eines Bimetalls verformt. So können Bewegungen der Spiegelscheibe 1 eingeleitet werden bzw. vorhandene Schwingungen der Spiegelscheibe 1 aktiv ausgelöscht werden. Dabei sind die einzelnen Piezo-Patches 21-26 zur Auslöschung von Schwingungen in den Richtungen der weichen Abstützung durch die Anordnung 2 selektiv anzusteuern. Konkret sind für eine Bewegung um die orthogonal zu der Spiralachse 5 verlaufende Hochachse nur die Piezo-Patches 22 und 25 gegensinnig anzusteuern. Für eine Bewegung um die senkrecht zu der Spiralachse 5 verlaufende Querachse sind hingegen nur die Piezo-Patches 23 und 26 gegensinnig anzusteuern; und für eine Bewegung in Richtung der Spiralachse 5 sind die Piezo-Patches 21 und 24 gleichsinnig anzusteuern. Da für jede dieser Bewegungen selektiv ein anderes Paar der Piezo-Patches 21 bis 26 anzusteuern ist, können Schwingungen in den Richtungen dieser Bewegungen unabhängig voneinander durch gegenphasige Ansteuerung der jeweiligen Piezo-Patches zu den vorhandenen Bewegungen der Spiegelscheibe 1 aktiv abgemindert werden.

In **Fig. 5** ist eine anders aufgebaute Vorrichtung 2 zur Lagerung der Spiegelscheibe 1 an der Karosserie eines Kraftfahrzeugs gezeigt, die aber die gleichen Richtungen harter und weicher Abstützung aufweist, wie die Vorrichtung 2 der bisherigen Ausführungsform. Die Schnittstellen 3 sind hier in zwei einander gegenüberliegenden Randbereichen der Spiegelscheibe 1 vorgesehen und stützen sich an einem Scheibenhalter 14 ab. Der Scheibenhalter 14 ist zur Lagerung an der Karosserie des Kraftfahrzeugs über eine Verstelleinrichtung 15 für die Verstellung der Spiegelscheibe 1 gegenüber der Karosserie des Kraftfahrzeugs vorgesehen. Eine solche Verstelleinrichtung ist grundsätzlich bekannt und umfasst einen oder mehrere elektrische Stellmotoren. Von den Schnittstellen 3 erstrecken sich zu gegenüberliegenden Randbereichen der Spiegelscheibe 1 angeordneten Schnittstellen 7 Doppelfedern 16. Der Aufbau der Doppelfedern 16 basiert auf jeweils zwei parallel zueinander verlaufenden Biegebalken 17, die durch Stringer 18 versteift sind. In **Fig. 6** sind die Biegebalken 17 ohne die Stringer 18 dargestellt. Die Biegebalken 17 und die Stringer 18 bestehen häufig sämtlich aus Stahl oder Kunststoff. Die Biegebalken 17 können aber auch aus Federstahl ausgebildet sein, an den die Stringer 18 aus hartem Kunststoff angespritzt sind. Die Stringer 18 versteifen die Federelemente 16 in den Richtungen der gewünschten harten Abstützung der Spiegelscheibe 1 an dem Scheibenhalter 14 gemäß Fig. 5. Sie belassen aber die Federelemente weich für die Richtungen der gewünschten weichen Abstützung.

Die in **Fig. 7** gezeigte Ausführungsform der Vorrichtung 2 zur schwingungsfreien Lagerung der Spiegelscheibe 1 an der Karosserie eines Kraftfahrzeugs basiert auf einem Paar von in Reihe geschalteten Vierfachhelices mit einander entgegensetzten Steigungen. Diese Vierfachhelices sind hier reduziert auf jeweils vier Blattfederabschnitte 19, die in drehsymmetrischer Anordnung um eine Helixachse 20 angeordnet und jeweils an einer der Schnittstellen 3 und 7 und einem Zwischenelement 27 um orthogonal zu der Helixachse 20 verlaufende Achsen verschwenkbar gelagert sind. Dabei ist die Steigung der beiden Blattfederabschnitte 19 von der Schnittstelle 3 bis zu dem Zwischenelement 21 gegensinnig zu der Steigung der Blattfederabschnitte 19 zwischen dem Zwischenelement 21 und der Schnittstelle 7. Dies hat zur Folge, dass eine lineare Bewegung der Spiegelscheibe 1 in Richtung der Spiegelachse 20 zwar zu einer Verdrehung des Zwischenelements 27 um die Helixachse 20 führt, aber keine Drehbewegung der Spiegelscheibe 1 um die Helixachse 20 auslöst. So sind auch hier die Richtungen der weichen und der harten Abstützung der Spiegelscheibe 1 an der Karosserie des Kraftfahrzeugs die gleichen wie bei den bisher dargestellten Ausführungsformen. Darüber hinaus bewirkt auch die Vorrichtung 2 gemäß Fig. 7 eine Entkopplung der Hauptbewegungsmoden der Spiegelscheibe 1 gegenüber der Karosserie des Kraftfahrzeugs.

**Fig. 8** skizziert eine Abwandlung der Vorrichtung 2 gemäß Fig. 7, bei der insgesamt drei über die Rückseite der Spiegelscheibe 1 verteilte Paare von zwei in Reihe geschalteten Vierfachhelices mit Bandfederabschnitten 19 entgegengesetzter Steigung vorgesehen sind. Dabei verlaufen die Helixachsen 20 parallel zueinander und orthogonal zu der Spiegelebene 6 der Spiegelscheibe 1. Durch die Mehrzahl der Paare von Mehrfachhelices entgegengesetzter Steigung kann die Steifigkeit der Abstützung der Spiegelscheibe 1 für Bewegungen parallel zu der Spiegelebene 6 weiter erhöht werden. Grundsätzlich ist eine derartige Parallelschaltung von mehreren elastischen Teilanordnungen, die jeweils auch einzeln als elastische Anordnung der Vorrichtung 2 verwendet werden könnten, vorteilhaft, wenn ein zu lagerndes Objekt große Abmessungen und/oder eine große Masse aufweist. Vorzugsweise werden die elastischen Teilanordnungen dabei symmetrisch um eine Achse angeordnet, die mit dem von der Vorrichtung 2 weich abgestützten translatorischen Freiheitsgrad zusammenfällt.

Der in **Fig. 9** in einem Längsschnitt dargestellte Außenspiegel 32 eines Kraftfahrzeugs weist ein Spiegelgehäuse 28 auf, an dem über die Verstelleinrichtung 15 der Scheibenhalter 14 verstellbar, d. h. um zwei Achsen verschwenkbar, gelagert ist. Das Spiegelgehäuse 38 umschließt den Spiegelhalter teilweise, der auch seinerseits gehäuseartig ausgebildet ist. Gegenüber einem Rand 33 des Scheibenhalters 14 springt die Spiegelscheibe 1 in den Spiegelhalter 14 hinein zurück. Dabei liegt sie hier aber noch vor dem Rand 34 des Spiegelgehäuses 28. Dennoch ist sie durch das Spiegelgehäuse 28 vor unmittelbaren aerodynamischen Lasten, d. h. einer in Fig. 9 von rechts kommenden Windanregung geschützt. Der Scheibenhalter 14 schützt sie darüber hinaus mit seinem überstehenden Rand 33 auch vor sich an diesem Rand 33 ausbildenden Wirbeln. Aerodynamische Druckschwankungen können zu einer Schwingungsanregung des Scheibenhalters 14 führen. Diese Schwingungen übertragen sich aber nicht auf die Spiegelscheibe 1, weil diese durch die Vorrichtung 2 in gegenüber diesen Fußpunktanregungen optimal entkoppelter und gedämpfter Weise an dem Scheibenhalter 14 gelagert ist. Gemäß Fig. 9 baut die Vorrichtung 2 auf Paaren auf Dreifachhelices aus Blattfedern 19 gegenläufiger Steigung mit Zwischenelementen 27 auf.

**Fig. 10** **und** **11** zeigen einen ganzen Außenspiegel 32, bei dem die richtungsweise harte und weiche Abstützung hier gegenüber dem Spiegelträger 14 durch eine Anordnung von Elastomerfedern 29 erreicht wird. Die Elastomerfedern 29 sind zwischen einem Außenumfang 30 der Spiegelscheibe 1 und einem ebenfalls starren Innenumfang 31 des Spiegelträgers 14 angeordnet und erstrecken sich dabei im Wesentlichen in bzw. nahe der Spiegelebene 6. Durch zugweiche Ausbildung der Elastomerfedern 29, oder sogar eine leichte Druckvorspannung zwischen den Umfängen 30 und 31 auf die Elastomerfedern 29 werden dieselben Richtungen harter und weicher Abstützung realisiert wie bei den bislang geschilderten Ausführungsformen der Vorrichtung 2 zur schwingungsfreien Lagerung der Spiegelscheibe 1 eines Außenspiegels 1 an der Karosserie eines Kraftfahrzeugs. Über einen Sockel 35 wird das Spiegelgehäuse 28 an der jeweiligen Karosserie des Kraftfahrzeugs befestigt. Dabei ist in dem Sockel 25 in der Regel ein Klappgelenk zum Abklappen des Außenspiegels 32 an die Karosserie vorgesehen. In Fig. 11 ist hier eine Windanregung 36 des Außenspiegels 32 angedeutet ebenso wie Wirbel 37, die sich um die Ränder 33 und 34 des Scheibenhalters 14 und des Spiegelgehäuses 28 ausbilden. Dabei liegt die Spiegelscheibe 1 hier so weit nach innen in den Außenspiegel 32 zurückversetzt, dass sie auch gegenüber dem Rand 34 des Spiegelgehäuses 28 zurückspringt und so vor einem unmittelbaren Einfluss der Wirbel 37 geschützt ist.

In den Fig. 5 bis 11 ist die Tilgungseinrichtung der Vorrichtung 2, die den Außenspiegel 1 bei den Eigenfrequenzen seiner weichen Abstützung ruhig hält, jeweils nicht gezeigt.

### BEZUGSZEICHENLISTE

- 1: Spiegelscheibe
- 2: Vorrichtung
- 3: Schnittstelle
- 4: Blattfeder
- 5: Spiralachse
- 6: Spiegelebene
- 7: Schnittstelle
- 8: Ausgleichsmasse
- 9: Schwingungstilger
- 10: Tilgermasse
- 11: Blattfeder
- 12: Bereich
- 13: Körper
- 14: Scheibenhalter
- 15: Verstelleinrichtung
- 16: Federelement
- 17: Biegebalken
- 18: Stringer
- 19: Blattfederabschnitt
- 20: Helixachse
- 21: Piezo-Patch
- 22: Piezo-Patch
- 23: Piezo-Patch
- 24: Piezo-Patch
- 25: Piezo-Patch
- 26: Piezo-Patch
- 27: Zwischenelement
- 28: Spiegelgehäuse
- 29: Elastomerfeder
- 30: Außenumfang
- 31: Innenumfang
- 32: Außenspiegel
- 33: Rand
- 34: Rand
- 35: Sockel
- 36: Windanregung
- 37: Wirbel

## Patentansprüche

1. Vorrichtung (2) zur schwingungsfreien Lagerung eines Objekts (1) an einer Struktur
- mit einer elastischen Anordnung, wobei die elastische Anordnung mindestens zwei in ihrer Blattebene spiralförmig ineinander gewundene Blattfedern (4) aufweist und das Objekt (1) in den Richtungen von mindestens zwei der insgesamt sechs translatorischen und rotatorischen Freiheitsgrade hart und in den Richtungen von mindestens zwei der insgesamt sechs translatorischen und rotatorischen Freiheitsgrade weich an der Struktur abstützt,
- wobei Hauptbewegungsmoden des Objekts (1) in den Richtungen der harten Abstützung um mindestens einen Faktor zehn höhere Eigenfrequenzen als Hauptbewegungsmoden des Objekts (1) in den Richtungen der weichen Abstützung aufweisen und
- wobei die weiche Abstützung ungedämpft ist, und
- mit einer Tilgungseinrichtung für die Hauptbewegungsmoden des Objekts (1) in den Richtungen der weichen Abstützung.

2. Vorrichtung (2) nach Anspruch 1, **dadurch gekennzeichnet, dass** die Richtungen der weichen Abstützung diejenigen eines translatorischen Freiheitsgrads und von zwei rota-torischen Freiheitsgraden um die beiden zu der Richtung des translatorischen Freiheitsgrads orthogonalen Achsen sind, wobei optional die Hauptbewegungsmoden des Objekts (1) in den Richtungen der weichen Abstützung voneinander entkoppelt sind.

3. Vorrichtung (2) nach einem der vorhergehenden Ansprüche, **dadurch gekennzeichnet, dass** die Tilgungseinrichtung passiv ist und gedämpft ist und auf die Eigenfrequenzen der Hauptbewegungsmoden des Objekts (1) in den Richtungen der weichen Abstützung abge-stimmte Tilgereigenfrequenzen aufweist, wobei optional die Tilgereigenfrequenzen der Tilgungseinrichtung um 5 % bis 25 % kleiner als die Eigenfrequenzen der Haupt-bewegungsmoden des Objekts (1) in den Richtungen der weichen Abstützung sind.

4. Vorrichtung (2) nach Anspruch 3, **dadurch gekennzeichnet,**
- dass das Lehrsche Dämpfungsmaß der gedämpften Tilgungseinrichtung kleiner als 0,5 3 ist und/oder
- dass die Tilgungseinrichtung eine Tilgermasse (10) aufweist, die an das Objekt (1) über eine weitere elastische Anordnung angekoppelt ist, die zu der elastischen Anordnung äquivalent ist und/oder
- dass die Tilgungseinrichtung eine Tilgermasse (10) aufweist, die das Objekt (1) bezüglich seiner Anbindung an die elastische Anordnung zumindest teilweise ausbalanciert.

5. Vorrichtung (2) nach einem der vorhergehenden Ansprüche, **dadurch gekennzeichnet, dass** die Hauptbewegungsmoden des Objekts (1) in den Richtungen der weichen Abstützung Eigenfrequenzen kleinergleich 10 Hz und die Hauptbewegungsmoden des Objekts (1) in den Richtungen der harten Abstützung Eigenfrequenzen größergleich 100 Hz aufweisen, wobei optional das Objekt (1) eine Masse von mindestens 100 g aufweist.

6. Vorrichtung (2) nach einem der vorhergehenden Ansprüche, **dadurch gekennzeichnet, dass** die elastische Anordnung zwei Federelemente (4, 16) aufweist, die an der Struktur oder dem Objekt (1) in Befestigungsbereichen befestigt sind, welche einander über den Schwerpunkt des Objekts (1) hinweg gegenüber liegen.

7. Vorrichtung (2) nach einem der vorhergehenden Ansprüche, **dadurch gekennzeichnet, dass** die elastische Anordnung mehrere parallel geschaltete elastische Teilanordnungen aufweist.

8. Vorrichtung (2) nach einem der vorhergehenden Ansprüche, **dadurch gekennzeichnet, dass** die elastische Anordnung ansteuerbare Funktionsmaterialien (21-26) umfasst, die Teil der Tilgungseinrichtung sind.

9. Vorrichtung (2) nach Anspruch 8, **dadurch gekennzeichnet, dass** die Funktions-materialien (21-26) so angeordnet sind, dass sie beim Ansteuern Bewegungen und/oder Kräfte in den Richtungen der weichen Abstützung zwischen dem Objekt (1) und der Struktur hervorrufen, wobei optional die Tilgungseinrichtung die Funktionsmaterialien (21-26) im Sinne einer aktiven Dämpfung des Objekts (1) in den Richtungen der Hauptmoden der weichen Abstützung ansteuert.

10. Außenspiegel (32) für ein Kraftfahrzeug mit einer Vorrichtung (2) nach einem der vorhergehenden Ansprüche zur schwingungsfreien Lagerung einer Spiegelscheibe (1) des Außenspiegels (32) an der Karosserie des Kraftfahrzeugs, wobei die Richtungen der weichen Abstützung diejenigen eines translatorischen Freiheitsgrads parallel zur Fahrzeuglängsachse und von zwei rotatorischen Freiheitsgraden um die Fahrzeugquerachse und die Fahrzeug-hochachse sind.

11. Außenspiegel (32) nach Anspruch 10, **dadurch gekennzeichnet, dass** die Vorrichtung (2) die Spiegelscheibe an einem Scheibenhalter (14) abstützt, wobei der Scheibenhalter (14) zumindest teilweise von einem Spiegelgehäuse (28) umgeben ist und an dem Spiegelgehäuse (28) über eine Verstelleinrichtung (15) verschwenkbar gelagert ist, wobei optional die Spiegel-scheibe (1) gegenüber einem Rand (33) des Scheibenhalters (14) und/oder gegenüber einem Rand (34) des Spiegelgehäuses (28) nach innen in den Scheibenhalter (14) bzw. das Spiegel-gehäuse (28) hinein versetzt angeordnet ist.

12. Windkraftanlage mit einer Vorrichtung (2) nach einem der vorhergehenden Ansprüche 1 bis 9 zur schwingungsfreien Lagerung eines Drehlagers eines um eine Rotorachse umlaufenden Rotors an einem Mast der Windkraftanlage, wobei die Richtungen der weichen Abstützung diejenigen eines translatorischen Freiheitsgrads in Richtung der Rotorachse und von zwei rotatorischen Freiheitsgraden um die dazu orthogonale vertikale und horizontale Achse sind.

13. Motorlager mit einer Vorrichtung (2) nach einem der vorhergehenden Ansprüche 1 bis 9 zur schwingungsfreien Lagerung eines Motors mit einem um eine Drehachse umlaufende Rotor an einer ortsfesten oder bewegten Struktur, wobei die Richtungen der weichen Abstützung diejenigen eines translatorischen Freiheitsgrads in Richtung der Rotorachse und von zwei rotatorischen Freiheitsgraden um die dazu und zueinander orthogonalen Achsen sind.

14. Lager mit einer Vorrichtung (2) nach einem der vorhergehenden Ansprüche 1 bis 9 zur schwingungsfreien Lagerung einer schlagenden oder rüttelnden Einrichtung mit einer längs einer Hauptachse wiederholt beschleunigten Masse an einer ortsfesten oder bewegten Struktur, wobei die Richtungen der weichen Abstützung diejenigen eines translatorischen Freiheitsgrads in Richtung der Hauptachse und von zwei rotatorischen Freiheitsgraden um die dazu und zuein-ander orthogonalen Achsen sind.

15. Lager mit einer Vorrichtung (2) nach einem der vorhergehenden Ansprüche 1 bis 9 zur schwingungsfreien Lagerung eines Objekts an einer schlagenden oder rüttelnden Einrichtung mit einer längs einer Hauptachse wiederholt beschleunigten Masse, wobei die Richtungen der weichen Abstützung diejenigen eines translatorischen Freiheitsgrads in Richtung der Haupt-achse und von zwei rotatorischen Freiheitsgraden um die dazu und zueinander orthogonalen Achsen sind.

## Claims

1. Device (2) for mounting an object (1) on a structure in a vibration-free manner
- with an elastic arrangement, wherein the elastic arrangement comprises at least two leaf springs (4) spirally wound one within the other within their leaf plane and supports the object (1) in the directions of at least two of the total of six translatory and rotatory degrees of freedom rigidly and in the directions of at least two of the total of six translatory and rotatory degrees of freedom softly at the structure,
- wherein main motion modes of the object (1) in the directions of the rigid support have eigenfrequencies which are higher at least by a factor of ten than those of main motion modes of the object (1) in the directions of the soft support, and
- wherein the soft support is undamped, and
- with a vibration absorber for the main motion modes of the object (1) in the directions of the soft support.

2. Device (2) of claim 1, **characterised in that** the directions of the soft support are those of a translatory degree of freedom and of two rotatory degrees of freedom about the two axes which are orthogonal to the direction of the translatory degree of freedom, wherein, optionally, the main motion modes of the object (1) in the directions of the soft support are decoupled from each other.

3. Device (2) of any of the preceding claims, **characterised in that** the vibration absorber is passive and damped and has vibration absorber eigenfrequencies tuned to the eigenfrequencies of the main motion modes of the object (1) in the directions of the soft support, wherein, optionally, the vibration absorber eigenfrequencies of the vibration absorber are by 5 % to 25 % smaller than the eigenfrequencies of the main motion modes of the object (1) in the directions of the soft support.

4. Device (2) of claim 3, **characterised in**
- **that** the attenuation factor according to Lehr of the damped vibration absorber is smaller than 0.5 and/or
- **that** the vibration absorber comprises an absorber mass (10) which is coupled to the object (1) via a further elastic arrangement which is equivalent to the elastic arrangement, and/or
- **that** the vibration absorber comprises an absorber mass (10) which at least partially balances the object (1) with regard to its connection to the elastic arrangement.

5. Device (2) of any of the preceding claims, **characterised in that** the main motion modes of the object (1) in the directions of the soft support have eigenfrequencies of not more than 10 Hz, and the main motion modes of the object (1) in the directions of the rigid support have eigenfrequencies of not less than 100 Hz, wherein, optionally, the object (1) has a mass of at least 100 g.

6. Device (2) of any of the preceding claims, **characterised in that** the elastic arrangement comprises two spring elements (4, 16) which are fixed to the structure or the object (1) in fixation areas, which are facing each other across the centre of gravity of the object (1).

7. Device (2) of any of the preceding claims, **characterised in that** the elastic arrangement comprises a plurality of elastic partial arrangements connected in parallel.

8. Device (2) of any of the preceding claims, **characterised in that** the elastic arrangement includes operatable function materials (21-26) which are part of the vibration absorber.

9. Device (2) of claim 8, **characterised in that** the function materials (21-26) are arranged in such a way that they generate movements and/or forces in the directions of the soft support between the object (1) and the structure when being operated, wherein, optionally, the vibration absorber operates the function materials (21-26) in the sense of an active damping of the object (1) in the directions of the main modes of the soft support.

10. Exterior mirror (32) for a motor vehicle with an device (2) of any of the preceding claims for mounting a mirror glass (1) of the exterior mirror (32) to the body of the motor vehicle in a vibration-free manner, wherein the directions of the soft support are those of a translatory degree of freedom parallel to the vehicle longitudinal axis and of two rotational degrees of freedom about the vehicle cross axis and the vehicle vertical axis.

11. Exterior mirror (32) of claim 10, **characterised in that** the device (2) supports the mirror glass at a glass holder (14), wherein the glass holder (14) is at least partially surrounded by a mirror housing (28) and is mounted to the mirror housing (28) via an adjusting device (25) in a swivelling way, wherein, optionally, the mirror glass (1), with regard to a rim (33) of the glass holder (14) and/or with regard to a rim (34) of the mirror housing (28), is offset inwards into the glass holder (14) or the mirror housing (28), respectively.

12. Wind power plant with a device (2) of any of the preceding claims 1 to 9 for mounting a rotation bearing of a rotor rotating about a rotor axis to a pylon of the wind power plant in a vibration-free manner, wherein the directions of the soft support are those of a translatory degree of freedom in the direction of the rotor axis and of two rotational degrees of freedom about the vertical and horizontal axes which are orthogonal thereto.

13. Motor bearing with a device (2) of any of the preceding claims 1 to 9 for mounting the motor having a rotor rotating about a rotation axis to a stationary or movable structure in a vibration-free manner, wherein the directions of the soft support are those of a translatory degree of freedom in the direction of the rotor axis and of two rotatory degrees of freedom about axes which are orthogonal thereto and orthogonal with regard to each other.

14. Bearing with a device (2) of any of the preceding claims 1 to 9 for mounting a beating or rocking device having a mass, which is repeatedly accelerated along a main axis, to a stationary or moving structure in a vibration-free manner, wherein the directions of the soft support are those of a translatory degree of freedom in the direction of the main axis and of two rotatory degrees of freedom about the axes orthogonal thereto and orthogonal with regard to each other.

15. Bearing with a device (2) of any of the preceding claims 1 to 9 for mounting an object to a beating or rocking device having a mass, which is repeatedly accelerated along a main axis, in a vibration-free manner, wherein the directions of the soft support are those of a translatory degree of freedom in the direction of the main axis and of two rotational degrees of freedom about the axes orthogonal thereto and orthogonal to each other.

## Revendications

1. Dispositif (2) permettant le montage sans vibrations d'un objet (1) sur une structure
- avec un agencement élastique, l'agencement élastique présentant au moins deux ressorts à lame (4) enroulés l'un dans l'autre en forme de spirale dans leur plan de lame et supportant l'objet (1) sur la structure de façon rigide dans les directions d'au moins deux degrés parmi un total de six degrés de liberté en translation et en rotation et de façon souple dans les directions d'au moins deux degrés parmi un total de six degrés de liberté en translation et en rotation,
- des modes de mouvement principaux de l'objet (1) présentant, dans les directions de l'appui rigide, des fréquences propres plus élevées d'au moins un facteur de dix que des modes de mouvement principaux de l'objet (1) dans les directions de l'appui souple, et
- l'appui souple n'étant pas amorti, et
- avec un système d'atténuation pour les modes de mouvement principaux de l'objet (1) dans les directions de l'appui souple.

2. Dispositif (2) selon la revendication 1, **caractérisé en ce que** les directions de l'appui souple sont celles d'un degré de liberté en translation et de deux degrés de liberté en rotation autour des deux axes orthogonaux à la direction du degré de liberté en translation, les modes de mouvement principaux de l'objet (1) étant de façon optionnelle découplés les uns des autres dans les directions de l'appui souple.

3. Dispositif (2) selon l'une des revendications précédentes, **caractérisé en ce que** le système d'atténuation est passif et est amorti et présente des fréquences propres d'atténuateur harmonisées avec les fréquences propres des modes de mouvement principaux de l'objet (1) dans les directions de l'appui souple, les fréquences propres d'atténuateur du système d'atténuateur étant de façon optionnelle inférieures de 5 % à 25 % aux fréquences propres des modes de mouvement principaux de l'objet (1) dans les directions de l'appui souple.

4. Dispositif (2) selon la revendication 3, **caractérisé en ce que**
- la valeur d'amortissement de Lehrsch du système d'atténuation amorti est inférieure à 0,5 et/ou
- le système d'atténuation présente une masse d'atténuateur (10) qui est couplée à l'objet (1) par le biais d'un autre agencement élastique qui est équivalent à l'agencement élastique et/ou
- le système d'atténuation présente une masse d'atténuateur (10) qui équilibre au moins partiellement l'objet (1) en ce qui concerne son rattachement à l'agencement élastique.

5. Dispositif (2) selon l'une des revendications précédentes, **caractérisé en ce que** les modes de mouvement principaux de l'objet (1) présentent dans les directions de l'appui souple des fréquences propres inférieures ou égales à 10 Hz, et les modes de mouvement principaux de l'objet (1) dans les directions de l'appui rigide présentent des fréquences propres supérieures ou égales à 100 Hz, l'objet (1) présentant de façon optionnelle une masse d'au moins 100 g.

6. Dispositif (2) selon l'une des revendications précédentes, **caractérisé en ce que** l'agencement élastique présente deux éléments de ressort (4, 16) qui sont fixés sur la structure ou sur l'objet (1) dans des zones de fixation qui se font face par-dessus le centre le gravité de l'objet (1).

7. Dispositif (2) selon l'une des revendications précédentes, **caractérisé en ce que** l'agencement élastique présente plusieurs agencements partiels élastiques montés en parallèle.

8. Dispositif (2) selon l'une des revendications précédentes, **caractérisé en ce que** l'agencement élastique comprend des matériaux fonctionnels (21-26) commandés qui font partie du système d'atténuation.

9. Dispositif (2) selon la revendication 8, **caractérisé en ce que** les matériaux fonctionnels (21-26) sont disposés de telle sorte que, lors de la commande, ils suscitent des mouvements et/ou des forces dans les directions de l'appui souple entre l'objet (1) et la structure, le système d'atténuation commandant de façon optionnelle les matériaux fonctionnels (21-26) dans le sens d'un amortissement actif de l'objet (1) dans les directions des modes principaux de l'appui souple.

10. Rétroviseur extérieur (32) pour un véhicule automobile avec un dispositif (2) selon l'une des revendications précédentes pour le montage sans vibrations d'un miroir de rétroviseur (1) du rétroviseur extérieur (32) sur la carrosserie du véhicule automobile, les directions de l'appui souple étant celles d'un degré de liberté en translation parallèlement à l'axe longitudinal du véhicule et de deux degrés de liberté en rotation autour de l'axe transversal du véhicule et de l'axe vertical du véhicule.

11. Rétroviseur extérieur (32) selon la revendication 10, **caractérisé en ce que** le dispositif (2) supporte le miroir de rétroviseur sur un élément de retenue de miroir (14), l'élément de retenue de miroir (14) étant entouré au moins partiellement d'un boîtier de rétroviseur (28) et étant supporté de façon pivotante sur le boîtier de miroir (28) par le biais d'un système de réglage (15), le miroir de rétroviseur (1) étant de façon optionnelle décalé par rapport à un bord (33) de l'élément de retenue de miroir (14) et/ou par rapport à un bord (34) du boîtier de rétroviseur (28) vers l'intérieur dans l'élément de retenue de miroir (14) ou respectivement dans le boîtier de rétroviseur (28).

12. Eolienne, avec un dispositif (2) selon l'une des revendications précédentes 1 à 9 pour le montage sans vibrations d'un palier rotatif d'un rotor tournant autour d'un axe de rotor sur un mât de l'éolienne, les directions de l'appui souple étant celles d'un degré de liberté en translation en direction de l'axe de rotor et de deux degrés de liberté en rotation autour de l'axe vertical et horizontal orthogonaux au degré de liberté en translation.

13. Palier de moteur avec un dispositif (2) selon l'une des revendications précédentes 1 à 9 pour le montage sans vibrations d'un moteur avec un rotor tournant autour d'un axe de rotation sur une structure stationnaire ou en mouvement, les directions de l'appui souple étant celles d'un degré de liberté en translation en direction de l'axe de rotor et de deux degrés de liberté en rotation autour de deux axes orthogonaux au degré de liberté en translation et l'un par rapport à l'autre.

14. Palier avec un dispositif (2) selon l'une des revendications précédentes 1 à 9 pour le montage sans vibrations d'un système avec cognements ou avec secousses avec une masse accélérée de façon répétée le long d'un axe principal sur une structure stationnaire ou en mouvement, les directions de l'appui souple étant celles d'un degré de liberté en translation en direction de l'axe principal et de deux degrés de liberté en rotation autour de deux axes orthogonaux au degré de liberté en translation et l'un par rapport à l'autre.

15. Palier avec un dispositif (2) selon l'une des revendications précédentes 1 à 9 pour le montage sans vibrations d'un objet sur un système avec cognements ou avec secousses avec une masse accélérée de façon répétée le long d'un axe principal, les directions de l'appui souple étant celles d'un degré de liberté en translation en direction de l'axe principal et de deux degrés de liberté en rotation autour de deux axes orthogonaux au degré de liberté en translation et l'un par rapport à l'autre.
